# EUROPÄISCHE PATENTSCHRIFT

(11) **EP 3 330 483 B1**
(45) Veröffentlichungstag und Bekanntmachung des Hinweises auf die Patenterteilung: **03.02.2021**
(21) Anmeldenummer: 16202237.0
(22) Anmeldetag: 05.12.2016
(51) Int. Cl.: F01C 17/06, F04C 25/02, F04C 29/00, F16D 1/108, F04C 18/344

(54) **VAKUUMPUMPE MIT EINER KUPPLUNGSANORDNUNG ZUR KOMPENSATION VON WELLENEXZENTRIZITÄTEN**
VACUUM PUMP WITH A JOINT ASSEMBLY ALLOWING COMPENSATION OF SHAFT ECCENTRICITIES
POMPE À VIDE AVEC ACCOUPLEMENT POUR COMPENSER LE DÉSALIGNEMENT DE L'ARBRE

(43) Veröffentlichungstag der Anmeldung: 06.06.2018
(73) Patentinhaber: PFEIFFER VACUUM GMBH, 35614 Asslar (DE)
(72) Erfinder: Lange, Timo, 35415 Pohlheim (DE); Cromm, Thomas, 35457 Lollar (DE); Schäfer, Maik, 35796 Weinbach (DE)
(74) Vertreter: Manitz Finsterwald Patent- und Rechtsanwaltspartnerschaft mbB

(56) Entgegenhaltungen:
- EP-A1- 3 029 326
- EP-A2- 2 963 240
- WO-A1-93/13325
- DE-A1- 1 600 198
- DE-A1- 3 805 346
- DE-C- 250 016
- DE-U- 6 752 034
- JP-A- H03 239 843
- US-A- 1 316 011

## Beschreibung

Die vorliegende Erfindung betrifft eine Vakuumpumpe, insbesondere eine Drehschieberpumpe, mit einem Pumpsystem, das von einem Elektromotor angetrieben wird, dessen Abtriebswelle mit einer Antriebswelle des Pumpsystems mittels einer Kupplungsanordnung zur Kompensation eines etwaigen Radialversatzes zwischen den beiden Wellen antriebswirksam verbunden ist.

Eine gattungsgemäße Pumpe ist der Art nach im Wesentlichen aus der EP 2 963 240 A2 bekannt. Die in der Druckschrift EP3 029 326 A1 beschriebene Pumpe weist eine Kupplungsanordnung mit einer Kupplungsscheibe mit zwei Linearführungen auf zur Verbindung zweier Kupplungsnaben zwecks Kompensation eines Radialversatzes. In der Druckschrift wird auch erwähnt, dass die Pumpe mit einem eigenen Motor angetrieben werden kann.

Ferner gehen aus den Druckschriften DE 38 05 346 A1, und DE 67 52 034 U sog. Oldham-Kupplungen in unterschiedlichen Ausgestaltungen hervor.

Obwohl die einzelnen Komponenten von Vakuumpumpen hochpräzise gearbeitet werden, können beim Zusammenbau derartiger Pumpen gewisse Montagetoleranzen auftreten, die dazu führen können, dass es zu einem Radialversatz zwischen der Abtriebswelle des Antriebsmotors der Pumpe und der von dem Motor angetriebenen Antriebswelle des Pumpsystems der Pumpe kommt. Selbst wenn derartige Montagetoleranzen nur gering sind, kann es insbesondere aufgrund der hohen Drehzahlen im Bereich von etwa 1500 bis 3600 U/min, mit denen derartige Pumpen betrieben werden, zu Materialermüdungserscheinungen kommen, wenn die Abtriebswelle des Elektromotors trotz eines etwaigen Radialversatzes gegenüber der Antriebswelle des Pumpsystems mit dieser unmittelbar drehstarr gekoppelt wird.

Der Erfindung liegt daher die Aufgabe zugrunde, derartigen Materialermüdungserscheinungen bei einer Vakuumpumpe, die sich aufgrund von Montagetoleranzen ergeben können, zuvor zu kommen.

Diese Aufgabe wird durch eine Vakuumpumpe mit den Merkmalen des Anspruchs 1 gelöst.

Bei den beiden Linearführungen handelt es sich um Schubgelenke, die eine Linearbewegung der Kupplungsscheibe in radialer Richtung der Wellen der Pumpe ermöglichen, eine Verdrehung zwischen den jeweiligen Kupplungspartnern in Form der Kupplungsnaben und der Kupplungsscheibe jedoch unterbinden. Da jedoch die potentiellen Bewegungsrichtungen der beiden Linearführungen lotrecht zueinander orientiert sind, wird die Kupplungsscheibe unverschieblich zwischen den beiden Kupplungsnaben gehalten, solange sich die Kupplungsanordnung bzw. die Wellen der Pumpe nicht drehen. Wird jedoch über die Kupplungsanordnung eine Drehung der Abtriebswelle des Elektromotors auf die Antriebswelle des Pumpsystems übertragen und liegt ein Radialversatz zwischen den beiden Wellen vor, so wird dieser Radialversatz durch eine Relativbewegung der Kupplungsscheibe ausgeglichen. Insbesondere kommt es hierbei zu einer Art Taumelbewegung der Kupplungsscheibe durch die ein etwaiger Radialversatz zwischen den beiden Wellen ausgeglichen wird. Je nach Drehstellung der Kupplungsscheibe erfährt dieselbe dabei eine momentane Bewegungsrichtung, die sich aus zwei zueinander lotrechten Bewegungskomponenten entsprechend den zueinander lotrechten Linearführung der Kupplungsscheibe zusammensetzt. Je nach Drehwinkel überwiegt hierbei die eine oder die andere Bewegungskomponente, wodurch es in Summe zu der erwähnten Taumelbewegung der Kupplungsscheibe kommt, wenn mittels der Kupplungsanordnung eine Drehung von der Abtriebswelle des Elektromotors auf die Antriebswelle des Pumpsystems übertragen wird.

Die Kupplungsscheibe gleicht somit infolge ihrer Taumelbewegung einen etwaigen Radialversatz zwischen den beiden Wellen aus, wobei sie zur Drehmomentübertragung zwischen den beiden Wellen mit diesen bzw. den Kupplungsnaben drehstarr über die jeweilige Linearführung verbunden ist. Ein etwaiger Radialversatz zwischen den beiden Wellen wird somit nicht durch Zwangsspannungen in einem Kupplungsbauteil kompensiert; vielmehr wird ein etwaiger Radialversatz kontinuierlich ausgeglichen, indem die Kupplungsscheibe eine durch die beiden Linearführungen definierte Taumelbewegung ausführt, wenn eine Drehbewegung der Abtriebswelle über die Kupplungsscheibe auf die Antriebswelle des Pumpsystems übertragen wird. Die Kupplungsscheibe unterliegt somit keinen Zwängen bzw. Zwangsspannungen, so dass sich keine Materialermüdungserscheinungen ergeben können.

Im Folgenden wird nun auf bevorzugte Ausführungsformen der Erfindung eingegangen. Weitere Ausführungsformen können sich auch aus den abhängigen Ansprüchen, der Figurenbeschreibung sowie den Zeichnungen ergeben.

So ist es gemäß einer bevorzugten Ausführungsform vorgesehen, dass die Kupplungsscheibe in axialer Richtung von vier Langlöchern durchsetzt ist, deren Längenerstreckung in radialer Richtung verläuft, wobei die Langlöcher jeweils um 90° in Umfangsrichtung zueinander versetzt sind. Die Kupplungsscheibe ist also auf der 3-, auf der 6-, auf der 9- und auf der 12-Uhr-Position jeweils von einem Langloch durchsetzt, dessen Längenerstreckung jeweils in radialer Richtung verläuft. In zwei dieser Langlöcher, die um 180° in Umfangsrichtung zueinander versetzt sind, also beispielsweise in die Langlöcher auf der 12- und auf der 6-Uhr-Stellung, greifen dabei zwei Nocken ein, die an einem Stirnende der ersten Kupplungsnabe ausgebildet sind. In entsprechender Weise greifen in die beiden anderen Langlöcher, also beispielweise in jene auf der 3- und auf der 9-Uhr-Position, zwei Nocken ein, die an einem Stirnende der zweiten Kupplungsnabe ausgebildet sind. Insofern bilden also zwei miteinander fluchtende Langlöcher der Kupplungsscheibe zusammen mit den in die Langlöcher greifenden Nocken, die von der ersten bzw. von der zweiten Kupplungsnabe abstehen, jeweils eine Linearführung. Hierbei greifen die Nocken der ersten Kupplungsnabe von einer Seite der Kupplungsscheibe in dieselbe bzw. in deren Langlöcher ein, wohingegen die Nocken der zweiten Kupplungsnabe von der anderen Seite der Kupplungsscheibe in dieselbe bzw. in die entsprechenden Langlöcher der Kupplungsscheibe eingreifen. Dies hat zur Folge, dass die Nocken der ersten Kupplungsnabe in axialer Richtung betrachtet zumindest bereichsweise die Nocken der zweiten Kupplungsnabe übergreifen. Ein mittels der Kupplungsscheibe zwischen den beiden Kupplungsnaben zu übertragendes Drehmoment wird somit im Wesentlichen in Form von in der Ebene der Kupplungsscheibe wirkenden Druckkräften zwischen den Nocken der ersten Kupplungsnabe und den Nocken der zweiten Kupplungsnabe übertragen.

Würden sich hingegen die Nocken der ersten bzw. der zweiten Kupplungsnabe in axialer Richtung nicht übergreifen, würde die Drehmoment- bzw. Kraftübertragung zu einem nicht unwesentlichen Anteil über Schubspannungen in der Kupplungsscheibe erfolgen, die zu einer nicht unerheblichen Verformung derselben führen können, sofern die Kupplungsscheibe nicht entsprechend massiv ausgebildet wird. Derartige Schubspannungen in der Kupplungsscheibe können aufgrund der erfindungsgemäßen Ausbildung derselben sowie der sich in axialer Richtung übergreifenden Nocken der beiden Kupplungsnaben weitestgehend vermieden werden, so dass die Kupplungsscheibe verhältnismäßig filigran ausgebildet werden kann, da sie im Wesentlichen nur auf Druck in Umfangsrichtung beansprucht wird.

Gemäß einer weiteren Ausführungsform kann jedes der Langlöcher eine in sich geschlossene Berandung aufweisen, die durch die Kupplungsscheibe gebildet wird. Gemäß einer anderen Ausführungsform kann jedes der Langlöcher eine offene Berandung aufweisen, die in einen Umfangsrand der Kupplungsscheibe übergeht. Besitzen also die Langlöcher eine geschlossene Berandung, so weisen die Langlöcher gewissermaßen im Wesentlichen die Gestalt einer "0" auf, wohingegen die Langlöcher gewissermaßen im Wesentlichen die Gestalt eines "U" aufweisen, wenn sie eine offene Berandung besitzen, die in einen Umfangsrand der Kupplungsscheibe übergeht.

Um sicherzustellen, dass Drehmomente zwischen den beiden Kupplungsnaben im Wesentlichen ausschließlich über in der Ebene der Kupplungsscheibe wirkende Druckkräfte übertragen werden, kann es gemäß einer weiteren Ausführungsform vorgesehen sein, dass sich die am Stirnende der ersten Kupplungsnabe und der zweiten Kupplungsnabe ausgebildeten Nocken in Axialrichtung über mehr als 70 %, vorzugsweise mehr als 85 % und insbesondere vorzugsweise mehr als 95 % der Dicke der Kupplungsscheibe in die jeweiligen Langlöcher hinein erstrecken. Die am Stirnende der ersten Kupplungsnabe ausgebildeten Nocken bilden somit mit den am Stirnende der zweiten Kupplungsnabe ausgebildeten Nocken in axialer Richtung betrachtet eine Übergreifungslänge, die größer als 40 %, vorzugsweise größer als 70 % und insbesondere größer als 90 % der Dicke der Kupplungsscheibe ist. Mit zunehmender Übergreifungslänge werden hierbei etwaige Scher- bzw. Querkraftbeanspruchungen der Kupplungsscheibe reduziert. Die Kupplungsscheibe kann somit verhältnismäßig filigran ausgeführt werden, da mit zunehmender Übergreifungslänge der Nocken der beiden Kupplungsnaben die Querkraftbeanspruchung der Kupplungsnabe reduziert wird.

Erfindungsgemäß ist die Kupplungsscheibe aus 42CrMo4+QT-Einsatzstahl gefertigt oder beschichtet.

Die Kupplungsscheibe ist somit auch bei geringeren Übergreifungslängen der Nocken der beiden Kupplungsnaben formstabil. Selbst wenn die Kupplungsscheibe also hohen mechanischen Beanspruchungen ausgesetzt ist, erhält sie somit ihre Form bei, um in der gewünschten Weise die zuvor beschriebene Taumelbewegung zwischen den Kupplungsnaben zum Ausgleich eines etwaigen Wellenversatzes durchführen zu können.

Wie aus den vorausstehenden Erläuterungen ersichtlich wird, kommt es aufgrund der Taumelbewegung der Kupplungsscheibe während des Betriebs der Pumpe zu Relativbewegungen zwischen den Kupplungspartnern und damit zu oszillierenden Gleitbewegungen zwischen der Kupplungsscheibe und den beiden Kupplungsnaben, wobei diese Gleitbewegungen wiederum oszillierende Auflagerkräfte zwischen den Kupplungspartnern hervorrufen. Somit kann es zu unerwünschten Verschleißerscheinungen der Kupplungspartner kommen. Ferner kann es bei einer Lastumkehr des Kupplungsstrangs zu einem Abheben und umseitigen Anschlagen der Kontaktflächen zwischen den Kupplungspartnern kommen, was in unerwünschter Weise ein Klappergeräusch hervorrufen kann. Um diesen Erscheinungen entgegenzuwirken, ist es erfindungsgemäß vorgesehen, dass die Oberflächen der Kupplungspartner und/oder die Materialien, aus denen die Kupplungspartner gefertigt sind, hinsichtlich ihrer Gleit- und Festigkeitseigenschaften optimal gewählt bzw. optimiert werden.

Dementsprechend kann es gemäß einer Ausführungsform vorgesehen sein, dass zumindest die Kontaktflächen eine Beschichtung aufweisen, die sich vorzugsweise durch einen geringen Reibkoeffizienten auszeichnet.

Anstatt die jeweiligen Kupplungspartner in der zuvor erläuterten Weise mit den erwähnten Beschichtungswerkstoffe zu beschichten, kann es gemäß einer weiteren Ausführungsform vorgesehen sein, die jeweiligen Kupplungspartner als Vollkörper aus den erwähnten Werkstoffen zu fertigen.

Erfindungsgemäß ist es vorgesehen, dass als Werkstoffe, aus denen die Kupplungspartner bestehen, und/oder als Beschichtungswerkstoff für die Kupplungspartner folgende Werkstoffe zum Einsatz kommen: für die zweite Kupplungsnabe Grauguss, bspw. GGG-40, für die erste Kupplungsnabe 16MnCr5-Einsatzstahl und für die Kupplungsscheibe 42CrMo4+QT-Einsatzstahl.

Gemäß noch einer weiteren Ausführungsform können die Nocken und die Langlöcher einen in axialer Richtung gleichbleibenden bzw. konstanten Querschnitt aufweisen. Hierdurch wird nicht nur die Montage der erfindungsgemäßen Kupplungsanordnung erleichtert, da die einzelnen Bauteile der Kupplungsanordnung in axialer Richtung einfach zusammengesteckt werden können; durch den in axialer Richtung gleichbleibenden Querschnitt der Nocken und der Langlöcher werden jedoch auch die Spannungen zwischen den Nocken und den Berandungen der Langlöcher reduziert, da aufgrund der in axialer Richtung gleichbleibenden Querschnittsflächen der Nocken und der Langlöcher die Nocken über ihre gesamte axiale Länge hinweg mit den jeweiligen Berandungen der Langlöcher in Kontakt stehen, wodurch der Krafteinleitungsbereich zugunsten einer Reduzierung der Spannungen maximiert wird.

Im Folgenden wird die Erfindung nun rein exemplarisch unter Bezugnahme auf die Zeichnungen beschrieben, in denen:
- Fig. 1: eine Schnittdarstellung durch eine erfindungsgemäße Vakuumpumpe zeigt;
- Fig. 2: eine vergrößerte Darstellung des Details "X" der Fig. 1 im Bereich der Kupplungsanordnung zeigt;
- Fig. 3: eine perspektivische Darstellung einer erfindungsgemäßen Kupplungsanordnung zeigt;
- Fig. 4: eine perspektivische Darstellung einer ersten Kupplungsnabe zeigt;
- Fig. 5: eine perspektivische Darstellung einer Pumpsystemwelle mit einer drehstar daran angebrachten zweiten Kupplungsnabe zeigt;
- Fig. 6: eine perspektivische Darstellung einer Kupplungsscheibe zeigt; und
- Fig. 7: eine Querschnittsdarstellung durch die Kupplungsanordnung der Fig. 3 im Bereich der Kupplungsscheibe zeigt.

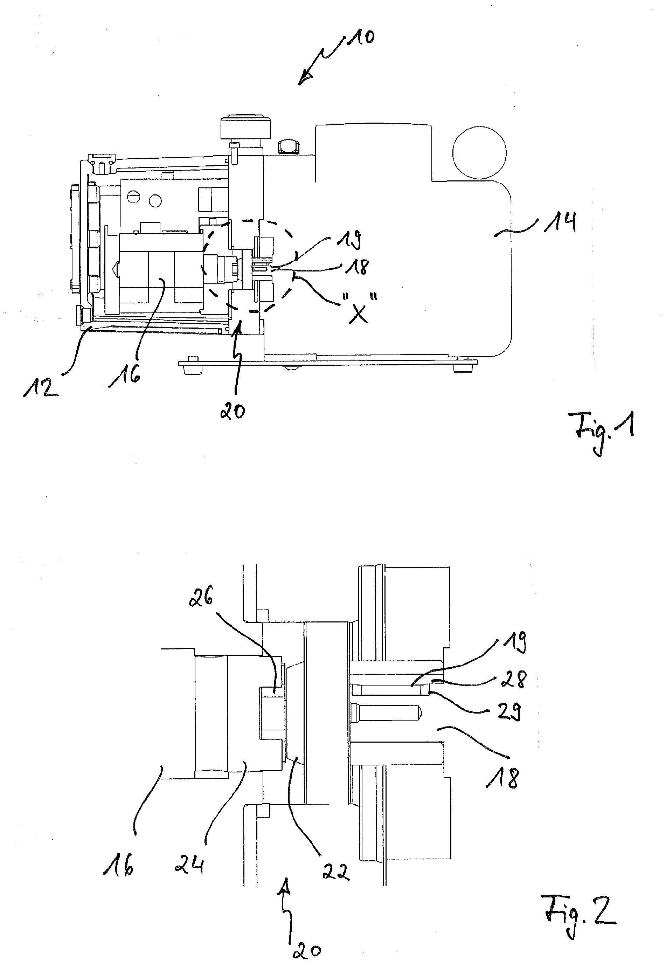

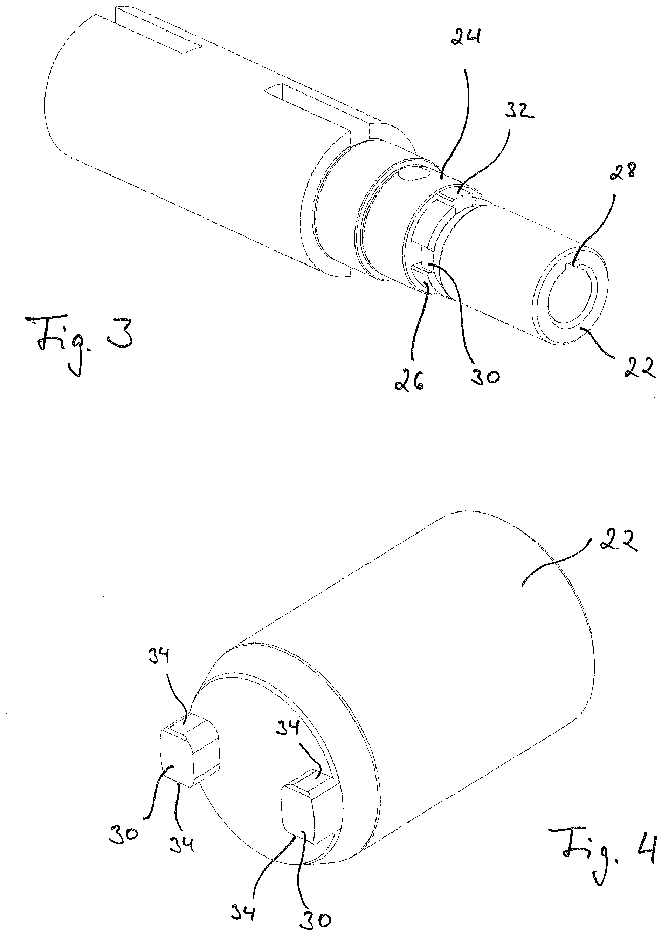

Die Fig. 1 veranschaulicht eine erfindungsgemäße Vakuumpumpe 10, bei der es sich hier um eine Drehschieberpumpe 10 handelt. Die Pumpe 10 umfasst ein Pumpsystemgehäuse 12, welches an ein Motorgehäuse 14 zur Aufnahme eines nicht dargestellten Elektromotors angebaut ist. Das Pumpsystemgehäuse 12 enthält ein hier nur schematisch dargestelltes Pumpsystem, welches von einem in dem Elektromotorgehäuse 14 untergebrachten Elektromotor (nicht dargestellt) angetrieben wird. Insbesondere weist das Pumpsystem eine Pumpsystemwelle 16 auf, welche von der Abtriebswelle 18 des Elektromotors, von der hier nur ein Keilwellenabschnitt 19 erkennbar ist (siehe vor allem Fig. 2), angetrieben wird und insofern eine Antriebswelle 16 darstellt. Da die Pumpsystem- bzw. Antriebswelle 16 des Pumpsystems aufgrund von Montagetoleranzen einen Radialversatz gegenüber der Abtriebswelle 18 aufweisen kann, sind die beiden Wellen 16, 18 mittels einer erfindungsgemäßen Kupplungsanordnung 20 antriebswirksam verbunden. Diese Kupplungsanordnung 20 wird nachfolgend unter Bezugnahme auf die Fig. 3 bis 7 im Detail beschrieben.

Wie der Fig. 3 entnommen werden kann, weist die Kupplungsanordnung 20 eine erste Kupplungsnabe 22, eine zweite Kupplungsnabe 24 sowie eine Kupplungsscheibe 26 auf, die sich im Kraftflusspfad zwischen den beiden Kupplungsnaben 22, 24 befindet. Bei der ersten Kupplungsnabe 22 handelt es sich um eine im Wesentlichen hohlzylindrische Buchse, die entlang ihres Innenumfangs eine axial ausgerichtete Nut 28 aufweist, die mit einer entsprechenden Feder 29 am Außenumfang der Abtriebswelle 18 des Elektromotors formschlüssig in Eingriff gebracht werden kann (siehe auch Fig. 2), um so die erste Kupplungsnabe 22 drehstarr mit der Abtriebswelle 18 des Elektromotors verbinden zu können. In entsprechender Weise ist die zweite Kupplungsnabe 24 mit der Pumpsystemswelle 16 verbunden.

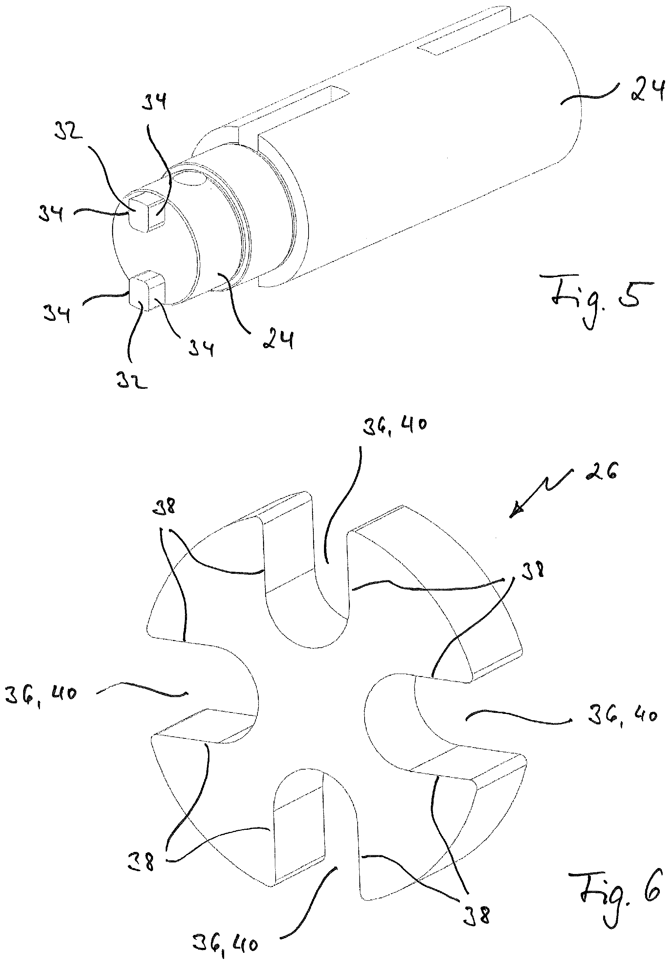

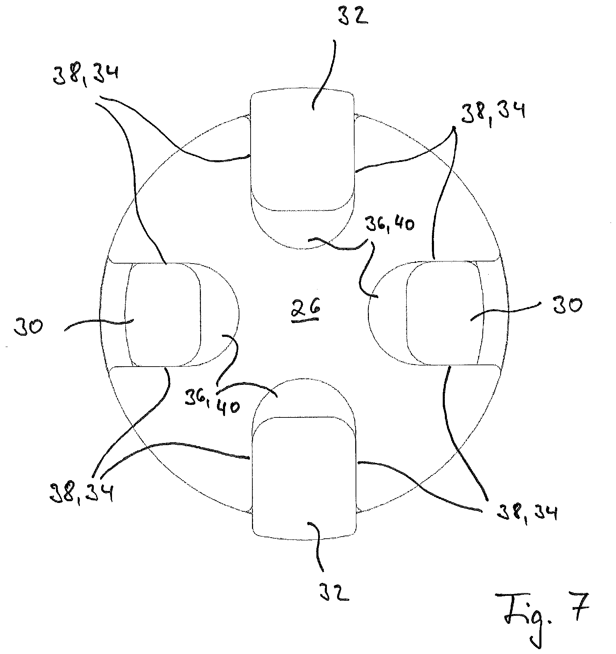

Wie den Fig. 4 und 5 entnommen werden kann, weisen sowohl die erste Kupplungsnabe 22 als auch die zweite Kupplungsnabe 24 jeweils zwei Nocken 30 bzw. 32 auf, welche an einem stirnseitigen geschlossenen Ende der jeweiligen Kupplungsnabe 22, 24 ausgebildet sind und von diesem in axialer Richtung abstehen. Sowohl die beiden Nocken 30 der ersten Kupplungsnabe 22 als auch die beiden Nocken 32 der zweiten Kupplungsnabe 24 sind dabei um 180° in Umfangsrichtung zueinander versetzt. Die beiden Nocken 30 der ersten Kupplungsnabe 22 weisen dabei in radialer Richtung denselben Abstand zur Achse der ersten Kupplungsnabe 22 auf und auch die beiden Nocken 32 der zweiten Kupplungsnabe 24 weisen denselben Abstand zur Achse der zweiten Kupplungsnabe 24 auf. Sowohl die Nocken 30 der ersten Kupplungsnabe 22 als auch die Nocken 32 der zweiten Kupplungsnabe 24 weisen einen im Wesentlichen rechteckigen Querschnitt auf (siehe insbesondere Fig. 7), der sich in axialer Richtung nicht verändert und somit konstant ist.

Wie am besten der Zusammenschau der Fig. 6 und 7 entnommen werden kann, weist die Kupplungsscheibe 26 vier Ausnehmungen 36 mit U-förmiger Gestalt auf, welche sich vom Umfangsrand der Kupplungsscheibe 26 radial nach innen erstrecken. Jede der Ausnehmungen 36 weist zwei parallele und radial ausgerichtete Führungsflächen 38 auf, was bedeutet, dass jede der Ausnehmungen 36 ein Langloch 40 bildet, welches die Kupplungsscheibe 26 durchsetzt.

Die Langlöcher 40 sind dabei jeweils um 90° in Umfangsrichtung versetzt zueinander in der Kupplungsscheibe 26 ausgebildet, so dass die Nocken 30 der ersten Kupplungsnabe 22 von einer Seite der Kupplungsscheibe 25 in zwei um 180° in Umfangsrichtung zueinander versetzte Langlöcher 40 der Kupplungsscheibe 26 eingreifen können und in entsprechender Weise die Nocken 32 der zweiten Kupplungsnabe 24 von der anderen Seite der Kupplungsscheibe 26 in die beiden anderen Langlöcher 40 der Kupplungsscheibe 26 eingreifen können (siehe Fig. 7).

Wie bereits erwähnt, weisen die Nocken 30, 32 im Querschnitt jeweils eine im Wesentlichen rechteckige Gestalt auf, wobei jeder Nocken 30, 32 zwei seitliche Führungsflächen 34 aufweist, die durch die Umfangsabmessung der Nocken 30 bzw. 32 voneinander beabstandet sind. Die Umfangsabmessung der Nocken 30, 32 ist dabei geringfügig kleiner als der Abstand zwischen den Führungsflächen 38 der Langlöcher 40 der Kupplungsscheibe 26, so dass die Kupplungsnaben 22, 24 über ihre Nocken 30 bzw. 32 mit einem geringen Montagespiel mit der Kupplungsscheibe 26 und insbesondere mit deren Langlöchern 40 gepaart werden kann. Die Kupplungsscheibe 26 kann somit unter Drehung eine Relativbewegung bezüglich der beiden Naben 22, 24 ausführen, sofern zwischen diesen ein Radialversatz vorliegt. Die Nocken 30 der ersten Kupplungsnabe 22 bilden somit in Verbindung mit den Langlöchern 40 der Kupplungsscheibe 26, in die sie eingreifen, eine erste Linearführung und auch die Nocken 32 der zweiten Kupplungsnabe 24 bilden in Verbindung mit den Langlöchern 40 der Kupplungsscheibe 26, in die sie eingreifen, eine zweite Linearführung. Die so gebildeten Linearführungen, mittels derer die beiden Kupplungsnaben 22, 24 mit der Kupplungsscheibe 26 drehstarr verbunden sind, sind dabei lotrecht zueinander orientiert. Wenn daher eine Drehbewegung der Motorabtriebswelle 18 über die Kupplungsanordnung 20 auf die Antriebswelle 16 übertragen wird, wird ein etwaiger Versatz der beiden Wellen 16, 18 durch eine Taumelbewegung der Kupplungsscheibe 26 ausgeglichen, wobei sich die Bewegung der Kupplungsscheibe 26 je nach Drehstellung der Wellen 16, 18 aus zwei Bewegungskomponenten zusammensetzt, die durch die Linearführungen vorgegeben sind.

Wie der Fig. 3 entnommen werden kann, weisen die Nocken 30 der ersten Kupplungsnabe 22 eine axiale Erstreckungslänge auf, die etwa 70 % der Dicke der Kupplungsscheibe 26 entspricht. Die Nocken 32 der zweiten Kupplungsnabe 24 weisen hingegen eine Längenerstreckung auf, die etwa 95 % der Dicke der Kupplungsscheibe 26 entspricht. Die Nocken 30 der ersten Kupplungsnabe 22 bilden somit mit den Nocken 32 der zweiten Kupplungsnabe 24 in axialer Richtung betrachtet eine Übergreifungslänge, die etwa 65 % der Dicke der Kupplungsscheibe 26 entspricht, wodurch sichergestellt werden kann, dass die Kupplungsscheibe 26 im Wesentlichen frei von Querkraftbeanspruchungen ist.

### Bezugszeichenliste

- 10: Drehschieberpumpe
- 12: Pumpsystemgehäuse
- 14: Elektromotorgehäuse
- 16: Pumpsystemwelle
- 18: Abtriebswelle des Elektromotors
- 19: Keilwellenabschnitt
- 20: Kupplungsanordnung
- 22: erste Kupplungsnabe
- 24: zweite Kupplungsnabe
- 26: Kupplungsscheibe
- 28: Nut
- 29: Feder
- 30: Nocken von 22
- 32: Nocken von 24
- 34: Führungsfläche von 30 bzw. 32
- 36: Ausnehmungen in 26
- 38: Führungsflächen von 36
- 40: Langlöcher durch 26

## Patentansprüche

1. Vakuumpumpe, insbesondere Drehschieberpumpe (10), mit einem Pumpsystem, das von einem Elektromotor angetrieben wird, wobei der Elektromotor zum Antrieb des Pumpsystems eine Abtriebswelle (18) aufweist, die mit einer Antriebswelle (16) des Pumpsystems mittels einer Kupplungsanordnung (20) antriebswirksam verbunden ist, wobei die Kupplungsanordnung (20) umfasst:
- eine erste Kupplungsnabe (22), die drehstarr mit der Abtriebswelle (18) des Elektromotors verbunden ist;
- eine zweite Kupplungsnabe (24), die drehstarr mit der Antriebswelle (16) des Pumpsystem verbunden ist; und
- eine Kupplungsscheibe (26) im Kraftflusspfad zwischen der Abtriebswelle (18) und der Antriebswelle (16);
wobei die Kupplungsscheibe (26) mittels einer ersten Linearführung mit der ersten Kupplungsnabe (22) drehstarr verbunden ist und mittels einer zweiten Linearführung mit der zweiten Kupplungsnabe (24) drehstarr verbunden ist, wobei die zweite Linearführung lotrecht zu der ersten Linearführung orientiert ist; **dadurch gekennzeichnet, dass** die erste Kupplungsnabe aus 16MnCr5-Einsatzstahl gefertigt oder damit beschichtet ist, die zweite Kupplungsnabe aus Grauguss gefertigt oder damit beschichtet ist, und die Kupplungsscheibe aus 42CrMo4+QT-Einsatzstahl gefertigt oder damit beschichtet ist.

2. Vakuumpumpe nach Anspruch 1,
**dadurch gekennzeichnet, dass**
die Kupplungsscheibe (26) von vier Langlöchern (40) durchsetzt ist, deren Längenerstreckung jeweils in radialer Richtung verläuft, wobei die Langlöcher (40) jeweils um 90° in Umfangsrichtung zueinander versetzt sind, wobei an einem Stirnende der ersten Kupplungsnabe (22) zwei Nocken (30) ausbildet sind, die in zwei Langlöcher (40) der Kupplungsscheibe (26) eingreifen, die um 180° in Umfangsrichtung zueinander versetzt sind, und wobei an einem Stirnende der zweiten Kupplungsnabe (24) ebenfalls zwei Nocken (32) ausbildet sind, die in jene zwei Langlöcher (40) der Kupplungsscheibe (26) eingreifen, in die die am Stirnende der ersten Kupplungsnabe (22) ausbildeten Nocken (30) nicht eingreifen.

3. Vakuumpumpe nach Anspruch 2,
**dadurch gekennzeichnet, dass**
ein jedes der Langlöcher (40) eine in sich geschlossenen Berandung aufweist, die durch die Kupplungsscheibe (26) gebildet wird; oder
ein jedes der Langlöcher (40) eine offene Berandung aufweist, die in einen Umfangsrand der Kupplungsscheibe (26) übergeht.

4. Vakuumpumpe nach Anspruch 2 oder 3,
**dadurch gekennzeichnet, dass**
die am Stirnende der ersten Kupplungsnabe (22) und der zweiten Kupplungsnabe (24) ausbildeten Nocken (30, 32) sich in axialer Richtung über mehr als 70%, vorzugsweise mehr als 85%, und insbesondere vorzugsweise mehr als 95% der Dicke der Kupplungsscheibe (26) in die jeweiligen Langlöcher (40) hineinerstrecken.

5. Vakuumpumpe nach zumindest einem der Ansprüche 2, 3 oder 4,
**dadurch gekennzeichnet, dass**
die am Stirnende der ersten Kupplungsnabe (22) ausbildeten Nocken (30) mit den am Stirnende der zweiten Kupplungsnabe (24) ausbildeten Nocken (32) eine Übergreifungslänge bilden, die größer als 40%, vorzugsweise größer als 70% und insbesondere größer als 90% der Dicke der Kupplungsscheibe (26) ist.

6. Vakuumpumpe nach zumindest einem der vorstehenden Ansprüche,
**dadurch gekennzeichnet, dass**
die Kupplungsscheibe (26) aus Stahl gefertigt ist, vorzugsweise aus Vergütungsstahl.

7. Vakuumpumpe nach zumindest einem der Ansprüche 2 bis 6,
**dadurch gekennzeichnet, dass**
die Nocken (30, 32) und die Langlöcher (40) einen in axialer Richtung gleichbleibenden Querschnitt aufweisen.

## Claims

1. A vacuum pump, in particular a rotary vane pump (10), comprising a pump system which is driven by an electric motor,
wherein the electric motor has an output shaft (18) for driving the pump system, said output shaft (18) being drive-effectively connected to a drive shaft (16) of the pump system by means of a coupling arrangement (20), wherein the coupling arrangement (20) comprises:
- a first coupling hub (22) which is rotationally rigidly connected to the output shaft (18) of the electric motor;
- a second coupling hub (24) which is rotationally rigidly connected to the drive shaft (16) of the pump system; and
- a coupling disk (26) in the force flow path between the output shaft (18) and the drive shaft (16),
wherein the coupling disk (26) is rotationally rigidly connected to the first coupling hub (22) by means of a first linear guide and is rotationally rigidly connected to the second coupling hub (24) by means of a second linear guide, with the second linear guide being oriented perpendicular to the first linear guide,
**characterized in that**
the first coupling hub is produced from or coated with 16MnCr5 case-hardened steel, the second coupling hub is produced from or coated with gray cast iron and the coupling disk is produced from or coated with 42CrMo4+QT case-hardened steel.

2. A vacuum pump in accordance with claim 1,
**characterized in that**
the coupling disk (26) is passed through by four elongate holes (40) whose longitudinal extent in each case extends in the radial direction, with the elongate holes (40) each being offset from one another by 90° in the peripheral direction,
with two cams (30) being formed at an end face of the first coupling hub (22) and engaging into two elongate holes (40) of the coupling disk (26) which are offset from one another by 180° in the peripheral direction, and with two cams (32) likewise being formed at an end face of the second coupling hub (24) and engaging into those two elongate holes (40) of the coupling disk (26) into which the cams (30) formed at the end face of the first coupling hub (22) do not engage.

3. A vacuum pump in accordance with claim 2,
**characterized in that**
each of the elongate holes (40) has a boundary which is closed in itself and which is formed by the coupling disk (26); or
each of the elongate holes (40) has a boundary which merges into a peripheral margin of the coupling disk (26).

4. A vacuum pump in accordance with claim 2 or claim 3,
**characterized in that**
the cams (30, 32) formed at the end face of the first coupling hub (22) and of the second coupling hub (24) extend in the axial direction over more than 70%, preferably over more than 85%, and in particular preferably over more than 95%, of the thickness of the coupling disk (26) into the respective elongate holes (40).

5. A vacuum pump in accordance with at least one of the claims 2, 3 or 4,
**characterized in that**
the cams (30) formed at the end face of the first coupling hub (22) form an overlap length with the cams (32) formed at the end face of the second coupling hub (24), said overlap length being greater than 40%, preferably greater than 70%, and in particular greater than 90%, of the thickness of the coupling disk (26).

6. A vacuum pump in accordance with at least one of the preceding claims,
**characterized in that**
the coupling disk (26) is produced from steel, preferably from heat-treated steel.

7. A vacuum pump in accordance with at least one of the claims 2 to 6,
**characterized in that**
the cams (30, 32) and the elongate holes (40) have a cross-section which is constant in the axial direction.

## Revendications

1. Pompe à vide, en particulier pompe à palettes (10), comportant un système de pompage entraîné par un moteur électrique,
dans laquelle
pour entraîner le système de pompage, le moteur électrique présente un arbre de sortie (18) qui est relié en entraînement à un arbre d'entrée (16) du système de pompage au moyen d'un ensemble coupleur (20), l'ensemble coupleur (20) comprenant :
- un premier moyeu de coupleur (22) relié solidairement en rotation à l'arbre de sortie (18) du moteur électrique ;
- un second moyeu de coupleur (24) relié solidairement en rotation à l'arbre d'entrée (16) du système de pompage ; et
- un disque de coupleur (26) dans le chemin du flux de force entre l'arbre de sortie (18) et l'arbre d'entrée (16) ;
le disque de coupleur (26) est relié solidairement en rotation au premier moyeu de coupleur (22) par l'intermédiaire d'un premier guidage linéaire et est relié solidairement en rotation au second moyeu de coupleur (24) par l'intermédiaire d'un second guidage linéaire,
le second guidage linéaire est orienté perpendiculairement au premier guidage linéaire ;
**caractérisée en ce que**
le premier moyeu de coupleur est fabriqué ou revêtu d'acier cémenté 16MnCr5, le second moyeu de coupleur est fabriqué ou revêtu de fonte grise, et le disque de coupleur est fabriqué ou revêtu d'acier cémenté 42CrMo4+QT.

2. Pompe à vide selon la revendication 1,
**caractérisée en ce que**
le disque de coupleur (26) est traversé par quatre trous oblongs (40) dont l'extension longitudinale respective s'étend dans la direction radiale, les trous oblongs (40) étant chacun décalés de 90° les uns par rapport aux autres dans la direction circonférentielle, deux cames (30) étant réalisées à une extrémité frontale du premier moyeu de coupleur (22), qui s'engagent dans deux trous oblongs (40) du disque de coupleur (26), qui sont décalés de 180° dans la direction circonférentielle l'un par rapport à l'autre, et deux cames (32) étant également réalisées à une extrémité frontale du second moyeu de coupleur (24), qui s'engagent dans les deux trous oblongs (40) du disque de coupleur (26) dans lesquels les cames (30) réalisées à l'extrémité frontale du premier moyeu de coupleur (22) ne s'engagent pas.

3. Pompe à vide selon la revendication 2,
**caractérisée en ce que**
chacun des trous oblongs (40) présente un rebord fermé en soi qui est formé par le disque de coupleur (26) ; ou
chacun des trous oblongs (40) présente un rebord ouvert qui se transforme en un bord périphérique du disque de coupleur (26).

4. Pompe à vide selon la revendication 2 ou 3,
**caractérisée en ce que**
les cames (30, 32) réalisées à l'extrémité frontale du premier moyeu de coupleur (22) et à celle du second moyeu de coupleur (24) s'étendent dans la direction axiale jusque dans les trous oblongs respectifs (40) sur plus de 70 %, de préférence sur plus de 85 %, et en particulier de préférence sur plus de 95 % de l'épaisseur du disque de coupleur (26).

5. Pompe à vide selon l'une au moins des revendications 2, 3 ou 4,
**caractérisée en ce que**
les cames (30) réalisées à l'extrémité frontale du premier moyeu de coupleur (22) forment, ensemble avec les cames (32) réalisées à l'extrémité frontale du second moyeu de coupleur (24), une longueur de chevauchement qui est supérieure à 40 %, de préférence supérieure à 70 % et en particulier supérieure à 90 % de l'épaisseur du disque de coupleur (26).

6. Pompe à vide selon l'une au moins des revendications précédentes,
**caractérisée en ce que**
le disque de coupleur (26) est fabriqué en acier, de préférence en acier traité.

7. Pompe à vide selon l'une au moins des revendications 2 à 6,
**caractérisée en ce que**
les cames (30, 32) et les trous oblongs (40) présentent une section transversale constante dans la direction axiale.
